# EUROPÄISCHE PATENTSCHRIFT

(11) **EP 1 390 414 B1**
(45) Veröffentlichungstag und Bekanntmachung des Hinweises auf die Patenterteilung: **30.08.2006**
(21) Anmeldenummer: 02721939.3
(22) Anmeldetag: 06.05.2002
(51) Int. Cl.: C08F 6/12, C08F 20/54

(54) **VERFAHREN ZUR ABTRENNUNG VON REVERSIBEL THERMOPRÄZIPITIERBAREN OLIGOMEREN N-SUBSTITUIERTER (METH)ACRYLAMIDVERBINDUNGEN UND DEREN KONJUGATE**
METHOD FOR THE SEPARATION OF OLIGOMERIC N-SUBSTITUTED (METH)ACRYLAMIDE COMPOUNDS AND CONJUGATES THEREOF WHICH ARE REVERSIBLY THERMALLY PRECIPITATING
PROCEDE DE SEPARATION DE COMPOSES D'AMIDES (METH)ACRYLIQUES N-SUBSTITUES OLIGOMERES A PRECIPITATION THERMIQUE REVERSIBLE, ET DE LEURS CONJUGUES

(30) Priorität: 14.05.2001 CH 875012001
(43) Veröffentlichungstag der Anmeldung: 25.02.2004
(73) Patentinhaber: Polytag Technology SA, 8708 Männedorf (CH)
(72) Erfinder: HILBRIG, Frank, D-95445 Bayreuth (DE); FREITAG, Ruth, D-95445 Bayreuth (DE)
(74) Vertreter: Herrmann, Peter Johannes
(86) Internationale Anmeldenummer: PCT/CH2002/000242
(87) Internationale Veröffentlichungsnummer: WO 2002/092642

(56) Entgegenhaltungen:
- WO-A-01/25287
- DING Z ET AL: "SYNTHESIS AND PURIFICATION OF THERMALLY SENSITIVE OLIGOMER-ENZYME CONJUGATES OF POLY(N-ISOPROPYLACRYLAMIDE)-TRYPSIN" BIOCONJUGATE CHEMISTRY, AMERICAN CHEMICAL SOCIETY, WASHINGTON, US, Bd. 7, 1996, Seiten 121-125, XP001007447 ISSN: 1043-1802

## Beschreibung

Die vorliegende Erfindung betrifft ein Verfahren zur Abtrennung von reversibel thermopräzipitierbaren oligomeren N-substituierten (Meth)acrylamiden und deren Konjugate aus wässriger Lösung, sowie abgetrennte thermopräzipitierbare oligomere N-substituierte (Meth)acrylamide und deren Konjugate, hergestellt nach dem Verfahren.

Im Bereich der Polymersynthese ist die radikalische Telomerisierung über ein Kettentransferreagenz eine gebräuchliche Methode, ein lineares, niedermolekulares und sehr homogen bezüglich der Massen verteiltes Polymer (Polymerisationsgrad kleiner als 100) kontrollierter Kettenlänge mit einer endständigen funktionellen Gruppe herzustellen. Über die funktionelle Gruppe können aus derart hergestellten Oligomeren kovalent gebundene Konjugate, beispielsweise Enzymkonjugate und Affinitätsmakroliganden (AML), hergestellt werden.

Eine Vielzahl von N-substituierten (Meth)acrylamiden bilden wasserlösliche Polymerverbindungen, die oberhalb einer unteren kritischen Entmischungstemperatur, genannt LCST, aus Wasser reversibel auspräzipitieren. Eine Liste infragekommender Monomere ist in der Patentschrift US 5,162,582 aufgeführt. Die LCST wird dabei durch Variation der Monomerchemie oder der Copolymerzusammensetzung festgelegt. Sie liegt beispielsweise bei Poly-N-isopropylacrylamid in Wasser bei 32-34°C. Die LCST ist unabhängig von der Kettenlänge der Polymere und dem pH-Wert der Lösung; sie wird in der Regel jedoch durch Salze in Abhängigkeit ihrer Molarität abgesenkt.

In aus dem Stand der Technik bekannten Verfahren werden homogene, reversibel thermopräzipitierbare Oligomere mit endständiger funktioneller Gruppe durch Telomerisierung in organischen Lösungsmitteln oder Wasser hergestellt. Die Ausbeute liegt über 60%. Die Aufreinigung dieser Oligomerverbindungen erfolgt durch wiederholte löslich-unlöslich Präzipitationen in organischen Lösungsmitteln, beispielsweise aus Aceton in Hexan, mit anschliessender Filtration und Vakuumtrocknung. Die wiederholte Aufreinigung ist notwendig, um die Oligomerpräparation von den toxischen Monomeren zu befreien.

Dieses Aufreinigungsverfahren erfordert jedoch verhältnismässig grosse Volumina an organischen Lösungsmitteln mit geringem Wassergehalt. Erfahrungsgemäss wird für einen Aufarbeitungsschritt etwa ein Liter n-Hexan mit einem Wassergehalt von unter 0.05% benötigt, um 10 g Oligomerverbindung zu präzipitieren. Der niedrige Wassergehalt der organischen Lösungsmittel ist erforderlich, um eine Gelatisierung der Oligomere während der Präzipitation zu vermeiden und damit die Oligomeraggregate in einer filtrierbaren Form zu halten. So ist es neben den hohen Kosten für Lösungsmittel und dem hohen Personaleinsatz für dieses nur schwer automatisierbare Aufreinigungsverfahren auch aus Gründen der Betriebssicherheit und des Umweltschutzes sehr ungünstig, ein solches Verfahren im industriellen Massstab mit den dazu nötigen Lösungsmittelvolumina zu verwenden.

Den reversibel thermopräzipitierbaren Oligomeren, sogenannte "smart polymers", wird ein vielfältiger Anwendungsbereich in der Biotechnologie, beispielsweise in der Biokatalyse und in der Bioseparation (Affinitätspräzipitation) zugeordnet. Beispielsweise beschreibt J.-P. Chen (J. Chem. Technol. Biotechnol. 73 (1998) 137-143) ein Konjugat mit α-Chymotrypsin, dessen enzymatische Aktivität und thermische Stabilität gegenüber dem nativen Enzym erhöht ist. Derartige Enzymkonjugate bieten für die Biokatalyse die Vorteile, dass die Katalyse homogen abläuft und die Biokatalysatoren durch Thermopräzipitation leicht abgetrennt und wiederverwendet werden können.

Die Affinitätspräzipitation ist ein Bioseparationsverfahren, das die Präzipitationseigenschaft der Oligomere in Verbindung mit Liganden, die eine spezifische Affinität zu einer Zielsubstanz besitzen, nutzt, um diese Zielsubstanz spezifisch abzutrennen und aufzureinigen.

In der WO 01/25287 A1 werden AML beschrieben, die effizient zur Protein- und Nukleinsäureaufreinigung eingesetzt werden können. Allerdings wurden die Oligomere nur in kleinen Mengen hergestellt, und deren Aufreinigung erfolgte entweder durch Präzipitation in organischen Lösungsmitteln oder durch Diafiltration gefolgt von Lyophilisierung. Letztere Methode ist jedoch sehr zeitintensiv und nur für relativ kleine Mengen einsetzbar. Für die Abtrennung der thermopräzipitierbaren Oligomere und AML (einschliesslich AML-Zielsubstanzkomplex) wurde die Zentrifugation gewählt, weil die Bioaufreinigung nur aus kleinen Volumina erfolgte.

Die industrielle Anwendung von "smart polymers" in der Biokatalyse und in der Bioseparation erfordert aber zum einen ein Verfahren zur Herstellung von monomerfreien Oligomeren im grossen Masstab und zum anderen ein Verfahren zur effizienten Abtrennung der Thermopräzipitate aus grossen Volumina. Allen bislang beschriebenen Beispielen zur Abtrennung von reversibel thermopräzipitierbaren Oligomeren und deren Konjugate (Enzymkonjugate, AML und AML-Zielsubstanz-Komplexe) aus wässriger Lösung ist gemeinsam, dass die Präzipitatabtrennung nur aus kleinen Volumenmengen durch Zentrifugation erfolgte.

Y.G. Takei et al. (Bioconjugate Chem. 4 (1993) 42-46) haben gezeigt, dass insbesondere bei verdünnten Lösungen niedermolekularer Oligomere sehr hohe Zentrifugalbeschleunigungen nötig sind, um mehr als 80% des Thermopräzipitats abzutrennen. Bei einer 1 Gew.-% Lösung eines Oligomers mit einer mittleren Molmasse von etwa 2'500 g/mol lassen sich jedoch selbst bei einer Zentrifugalbeschleunigung von 10'000g nur etwa 60% als Präzipitat abtrennen. Die Zentrifugation hat zudem den Nachteil, dass sie sehr kompakte Präzipitatgele erzeugt, die sich nur langsam wieder auflösen lassen. Sie ist ausserdem nur im Chargenbetrieb und damit für relativ kleine Volumenmengen einsetztbar, da eine kontinuierliche Führung des Thermopräzipitats aufgrund seiner gelatinen Konsistenz nicht möglich ist.

Y.G. Takei et al. (Bioconjugate Chem. 4 (1993) 42-46) haben ebenso gezeigt, dass bei Oligomeren mit einer mittleren Molmasse unter 5'000 g/mol die Filtration des Präzipitats sehr hohe Verluste verursacht. Beispielsweise lassen sich präzipitierte Oligomere mit einer mittleren Molmasse von etwa 2'500 g/mol aus einer 1 Gew.-% Lösung nur zu etwa 20% durch Filtration abtrennen; bei 10 Gew.-% steigert sich die Wiedergewinnungsrate auf etwa 70%.

Aus dem Stand der Technik sind somit weder Verfahren bekannt, die es ermöglichen, reversibel thermopräzipitierbare Oligomere in grossen Mengen ohne Verwendung organischer Lösungsmittel aufzureinigen, noch sind Verfahren bekannt, mit denen reversibel thermopräzipitierbare Oligomere und deren Konjugate aus wässrigen Lösungen grosser Volumina effizient abgetrennt werden können.

Eine der vorliegenden Erfindung zugrundeliegende Aufgabe ist es, ein Aufarbeitungs- und Abtrennverfahren bereitzustellen, das es auf effiziente Weise ermöglicht, reversibel thermopräzipitierbare Oligomere und deren Konjugate aus wässriger Lösung abzutrennen.

Eine weitere Aufgabe ist es oligomere N-substituierte (Meth)acrylamide mit einer verbesserten Abtrennrate zur Verfügung zu stellen.

Die Aufgabe wird erfindungsgemäss dadurch gelöst, dass die oligomeren N-substituierten (Meth)acrylamide und deren Konjugate in Gegenwart von Salzen und in Gegenwart von Filterhilfsmitteln thermisch präzipitiert und filtriert werden.

Es wurde nun festgestellt, dass nach dem Verfahren der vorliegenden Erfindung schnell aus jeder Volumenmenge, beispielsweise von 1 ml bis 10'000 l, wässriger Lösung die thermopräzipitierbaren Oligomere und deren Konjugate effizient abgetrennt werden können. Es lassen sich damit durch wiederholte Abtrennungen oder Waschungen monomerfreie (Monomeranteil unter 1 ppm) oligomere N-substituierte (Meth)acrylamide herstellen.

Besonders vorteilhaft ist, dass mit dem Verfahren der vorliegenden Erfindung auch Oligomere mit einer mittleren Molmasse zwischen 500 g/mol und 5'000 g/mol wirkungsvoll abgetrennt werden können. Dies ist ein besonderer Vorteil, da nur bei den kurzkettigen Oligomeren die volle Kopplungsaktivität der endständigen funktionellen Gruppe gegeben ist. Ausserdem ist nur bei Enzymkonjugaten und AML mit derart kurzkettigen Oligomerverbindungen eine hohe Enzymaktivität bzw. diffusionsfreie und homogene Affinitätswechselwirkung gewährleistet.

Es ist ebenso vorteilhaft, dass mit dem Verfahren der vorliegenden Erfindung auch N-substituierte (Meth)acrylamidkonjugate aus verdünnten Lösungen wirkungsvoll abgetrennt werden können. Ein Merkmal der Biokatalyse und von biotechnologischen Aufreinigungsverfahren ist, dass die Katalysatoren und die aufzureinigenden Zielsubstanzen nur in geringen Konzentrationen eingesetzt werden bzw. vorhanden sind. Daher müssen den reversibel thermopräzipitierbaren Oligomerkonjugaten eine bestimmte Menge Oligomer als Präzipitationspromotoren zugesetzt werden, um einen guten Abtrenngrad zu erzielen. Die Menge an Promotoren muss abgestimmt sein auf den angestrebten Abtrenngrad und Aktivitätsgrad des Biokatalysators bzw. AML. Der Grad nicht-spezifischer Adsorption und/oder Absorption muss ebenfalls bei der Promotorzugabe berücksichtigt werden. Daher sollte die Promotorzugabe minimal gehalten werden. Es hat sich als sinnvoll erwiesen, dass die Gesamtmenge an Oligomerverbindungen und deren Konjugate in wässriger Lösung zwischen 0.1 Gew.-% und 10 Gew.-%, bevorzugt zwischen 0.8 Gew.-% und 3 Gew.-% liegt.

Es ist zweckmässig; dass die Oligomere und deren Konjugate eine LCST in Wasser zwischen 10°C und 80°C haben. Bei einer LCST oberhalb von 80°C wird die Durchführung der Thermopräzipitation technisch schwierig durchführbar. Bei einer LCST unter 10°C kann die Auflösung des Präzipitats unmöglich werden, wenn LCST absenkende Substanzen zugegen sind. Mit Poly-N-isopropylacrylamid, Poly-N-n-propylacrylamid, Poly-N-acryoylpyrrolidin und dem Co-oligomer zusammengesetzt aus N-isopropylacrylamid und N,N-dimethylacrylamid im Monomerverhältnis 80:20 ist der genannte LCST-Bereich abgedeckt. Die entsprechenden Monomere sind chemisch einfach und wirtschaftlich herzustellen.

Es ist ferner günstig, wenn die Thermopräzipitation in Gegenwart von Salzen durchgeführt wird. Reine Oligomere bilden in Wasser bei einer Temperatur über der LCST sehr feinverteilte, instabile Aggregate, die sich nur in ungenügendem Mass abtrennen lassen. Neben dem in der Regel LCST-absenkenden Effekt haben Salze auch schon bei geringen Molaritäten einen entscheidenden Einfluss auf das Aggregationsverhalten von Thermopräzipitaten. Beispielsweise bilden sich in Gegenwart von Natriumacetat sehr feingeformte, separate Präzipitatpartikel, die eine Tendenz zur Flotation besitzen. Mit Chloridsalzen dagegen bilden sich häufig gelatine, stark zusammenhängende Präzipitate. Die Auswahl der Salze, deren Mischung und Menge kann nur empirisch auf die spezielle Anwendung hin festgelegt werden.
Dabei müssen neben den aggregationsfördernden auch die LCST-absenkenden Eigenschaften der Salze berücksichtigt werden. Vorteilhalt ist eine Gesamtsalzkonzentration zwischen 0.01 M und 3 M. Für die meisten Anwendungen sind jedoch Gesamtsalzkonzentrationen von 0.5 M bis 1.5 M ausreichend, um das Aggregationsverhalten des Präzipitats so zu beeinflussen, dass eine hohe Abtrennrate beim Filtrieren erreicht werden kann.
Wichtig ist ausserdem die Temperatur oberhalb der LCST, bei der die Oligomere und deren Konjugate präzipitiert und filtriert werden. Es ist zweckmässig, dass die Präzipitations- und gleichfalls die Filtrationstemperatur 1°C bis 20°C über der LCST liegt. Bei einer Temperatur von mehr als 20°C über der LCST treten Verluste auf, weil Präzipitataggregate wieder dissoziieren. Bevorzugt wird ein Temperaturbereich von 5°C bis 10°C über der LCST. Wichtig ist, dass während der Filtration keine Temperaturabsenkung auftritt. Dadurch können ebenfalls Verluste bei der Abtrennung infolge Wiederauflösen des Präzipitats auftreten.

Entscheidend für eine effiziente Abtrennung thermopräzipitierbarer N-substituierter (Meth)acrylamide und deren Konjugate aus wässriger Lösung sind Filterhilfsmittel. Es hat sich als zweckmäßig erwiesen als Filterhilfsmittel Zellstoffe mit zusätzlich folgenden Eigenschaften zu verwenden:
- Zellstoffanteil: ≥ 99%
- Nassdichte: 0.2 - 0.3 g/cm³
- Faserlänge: < 75 µm (99%), < 32 µm (65%)

Das hat den Vorteil, dass in einem Filtrationsschritt effizient thermopräzipitierte Oligomerverbindungen mit einem Abtrenngrad von über 90% bei ausreichend hohem Filtrationsfluss und moderatem Differentialdruck abgetrennt werden können. Dabei kann das Filterhilfsmittel bereits während der Thermopräzipitation zugegen sein oder zu den thermopräzipitierten Oligomerverbindungen zugegeben werden. Auch die Abtrennung von Thermopräzipitat über ein Bett von Filterhilfsmittel ist möglich. Die vorteilhafteste Variante ist die Gegenwart des Filterhilfsmittels während der Präzipitation. Dadurch wird das Filterhilfsmittel in das aggregierende Thermopräzipitat miteingebaut, und die Abtrennung feinster Aggregate ist somit möglich. Vorteilhalt ist zudem, dass sich insbesondere bei Verwendung von Zellstoffen die Präzipitate bei einer Temperatur unterhalb der LCST schnell wieder auflösen lassen. Neben der Effizienz bietet die Verwendung hochreiner Filterhilfsmittel den Vorteil, dass deren Oberflächen standardisiert sind, und damit deren Eigenschaften kontrolliert und/oder modifiziert werden können. Vorallem beim Affinitätspräzipitationsverfahren lassen sich damit Verluste infolge von Adsorption an der Filterhilfsmitteloberfläche und/oder nichtspezifische Adsorptionseffekte minimieren. Auch die Möglichkeit des Austauschs des Filterhilfsmittels ist gegeben.
Die Menge an Filterhilfsmittel, bezogen auf den Gewichtprozentanteil der Präzipitate aus der zu filtrierenden Lösung, die Filtrationsfläche und die Höhe des maximal anzulegenden Filtrationsüberdrucks kann jedoch nur empirisch bestimmt werden.

Die Erfindung soll anhand eines Ausführungsbeispiels näher beschrieben werden.

### Beispiel 1

### Messverfahren:

ICP Atom-Emmissionsspektroskopie
Die Oligomermenge in wässriger Lösung wurde anhand des Schwefelgehalts mittels ICP-AES (Plasma 1000 der Firma Perkin Elmer) bei einer Wellenlänge von 182,037 nm mit automatischer Untergrundkorrektur und Kalibrierung mit einer Schwefelsäurelösung bestimmt.

### Reversed-phase HPLC

Die N-isopropylacrylamid Monomerkonzentration wurde mittles einer reversed-phase Säule Zorbax Rx C18 (4.6mm x 25cm) der Firma Hewlett-Packard und eines HPLC Systems bestehend aus einer binären Pumpe der Firma TechLab, dem Solventienentgaser ERC-3112 der Firma ERMA CR. und dem UV/Vis Detektor SPD-10A der Firma Shimadzu unter folgenden Bedingungen bestimmt:

| | |
|---|---|
| Solvent A | Wasser |
| Solvent B | Acetonitril |
| | 0-98% Gradient in 30 min. |
| Fluss | 1 ml/min. |
| Injektionsvolumen | 20 µl |
| Detektion | UV@ 214 nm |

Oligomeres N-isopropylacrylamid (Mₙ = 2'300 g/mol) wurde durch Telomerisierung von N-isopropylacrylamid mit 3-Mercaptopropionsäure und Azoisobutyronitril in Methanol bei 65°C hergestellt. Anschließend wurde Methanol unter Vakuum abdestilliert, und das Oligomer wurde in Wasser aufgenommen.
Zu 150 ml der wässrigen Oligomerlösung wurden bei 15°C 1.0 g Zellstoff (Diacel-75, Markenzeichen der Firma CFF) und 8.766 g NaCl zugegeben (LCST = 22°C). Die Lösung wurde unter Rühren auf 30°C erwärmt und in einem thermostatisierten Nutsche-Filter (10 cm² Filterfläche, 200 ml Füllvolumen) über ein PVDF Kette/PTFE Schuss Monofilament (Porengrösse 11.5 µm) als Filtermedium filtriert. Es wurde drucklos ein klares Filtrat mit einem mittleren Fluss von mehr als 4 m³/m²h und einer Temperatur von 29°C erhalten. Der Filterkuchen wurde in 1 M NaCl bei 15°C resupendiert, und das Oligomer wurde erneut durch Thermopräzipitation abgetrennt. Dieses Verfahren wurde insgesamt dreimal wiederholt.

ICP-AES Messungen der Filtratproben zeigen gegenüber Eichmessungen, dass beim letzten Abtrennprozess mehr als 97% der Oligomere aus einer 0.5 Gew.% Lösung abgetrennt wurden. HPLC Messungen des Filterkuchens zeigen gegenüber Eichmessungen, dass die Monomerverunreinigung in einem Filtrationsschritt um den Faktor 44 reduziert wird.

## Patentansprüche

1. Verfahren zur Abtrennung von reversibel thermopräzipitierbaren oligomeren N-substituierten (Meth)acrylamiden und deren Konjugate aus wässriger Lösung, **dadurch gekennzeichnet, dass** die oligomeren N-substituierten (Meth)acrylamide und deren Konjugate in Gegenwart von Salzen und in Gegenwart von Filterhilfsmitteln thermisch präzipitiert und filtriert werden.

2. Verfahren nach Anspruch 1, **dadurch gekennzeichnet, dass** die Oligomere aus sich wiederholenden Einheiten von N-isopropylacrylamid, N-n-propylacrylamid oder N-acryoylpyrrolidin bestehen oder Co-oligomere zusammengesetzt aus N-isopropylacrylamid und N,N-dimethylacrylamid im Monomerverhältnis 80:20 sind.

3. Verfahren nach den Ansprüchen 1 und 2, **dadurch gekennzeichnet, dass** als Salze Kalium-, Natrium-, Ammonium-, Calzium- und/oder Magnesiumsalze von Chlorid, Acetat und/oder Sulfat sowie deren Mischungen verwendet werden.

4. Verfahren nach Anspruch 3, **dadurch gekennzeichnet, dass** die Gesamtkonzentration an Salzen zwischen 0.01 M und 3 M liegt.

5. Verfahren nach den Ansprüchen 1 bis 4, **dadurch gekennzeichnet, dass** die Gesamtmenge an oligomeren N-substituierten (Meth)acrylamiden und deren Konjugate in wässriger Lösung zwischen 0.1 Gew.-% und 10 Gew.-% beträgt.

6. Verfahren nach den Ansprüchen 1 bis 5, **dadurch gekennzeichnet, dass** die oligomeren N-substituierten (Meth)acrylamide und deren Konjugate bei 1°C bis 20°C, bevorzugt bei 5°C bis 10°C oberhalb der LCST thermopräzipitiert und bei gleicher Temperatur filtriert werden.

7. Verfahren nach den Ansprüchen 1 bis 6, **dadurch gekennzeichnet, dass** als Filterhilfsmittel Zellstoffe mit folgenden Eigenschaften verwendet werden:
• Zellstoffanteil: ≥ 99%
• Nassdichte: 0.2 - 0.3 g/cm³
• Faserlänge: < 75 µm (99%), < 32 µm (65%)

8. Gemisch aus Filterhilfsmittel und reversibel thermopräzipitierbaren oligomeren N-substituierte (Meth)acrylamiden und deren Konjugate, abgetrennt nach dem Verfahren gemäss den Ansprüchen 1 bis 7, **gekennzeichnet durch** eine Abtrennrate des Filterhilfsmittels und reversibel thermopräzipitierbaren oligomeren N-substituierte (Meth)acrylamiden und deren Konjugate von jeweils über 90%.

9. N-substituierte (Meth)acrylamidverbindungen nach Anspruch 8, **dadurch gekennzeichnet, dass** die reversibel thermopräzipitierbaren N-substituierten (Meth)acrylamide eine mittlere Molmasse zwischen 500 g/mol und 5'000 g/mol haben.

10. N-substituierte (Meth)acrylamidverbindungen nach Anspruch 8, **dadurch gekennzeichnet, dass** bei den reversibel thermopräzipitierbaren N-substituierten (Meth)acrylamiden und deren Konjugate die LCST in Wasser zwischen 10°C und 80°C liegt.

## Claims

1. A method for the separation of reversibly thermally precipitatable oligomeric N-substituted (meth)acrylamides and their conjugates from aqueous solution, wherein the oligomeric N-substituted (meth)acrylamides and data conjugates are precipitated thermally and filtered in the presence of salts and in the presence of filter aids.

2. The method of claim 1, wherein the oligomers consist of repeating units of N-isopropylacrylamide, N-n-propylacrylamide or N-acryloylpyrrolidine or of co-oligomers of N-isopropylacrylamide and N,N-dimethylacrylamide in a monomeric ratio of 80 : 20.

3. The method of claims 1 and 2, wherein, as salts, potassium, sodium, ammonium, calcium and/or magnesium salts of chloride, acetate and/or sulfate, as well as their mixtures are used.

4. The method of claim 3, wherein the total concentration of the salts is between 0.01 M and 3 M.

5. The method of claims 1 to 4, wherein the total amount of the oligomeric N-substituted (meth)acrylamides and their conjugates in aqueous solution is between 0.1 percent by weight and 10 percent by weight.

6. The method of claims 1 to 5, wherein the oligomeric N-substituted (meth)acrylamides and their conjugates are precipitated thermally at 1°C to 20°C and preferably at 5°C to 10°C above the LCST and filtered at the same temperature.

7. The method of claims 1 to 6, wherein celluloses with the following properties are used as filter aids,
• proportion of cellulose: ≥ 99 percent
• wet density: 0.2 - 0.3 g/cc
• fiber length: < 75 µm (99%), < 32 µm (65%).

8. A mixture of filter aids and reversibly thermally precipitatable oligomeric N-substituted (meth)acrylamides and their conjugates, separated by the method of claims 1 to 7, wherein the separation rate of the filter aid and the reversibly thermally precipitatable, oligomeric, N-substituted (meth)acrylamides and their conjugates is more than 90 percent.

9. The N-substituted (meth)acrylamide compounds of claim 8, wherein the reversibly thermally precipitatable N-substituted (meth)acrylamides have an average molecular weight between 500 g/mole and 5,000 g/mole.

10. The N-substituted (meth)acrylamide compounds of claim 8, wherein the LCST in water of the reversibly thermally precipitatable N-substituted (meth)acrylamides and their conjugates is between 10°C and 80°C.

## Revendications

1. Procédé pour séparer, d'une solution aqueuse, des (méth)acrylamides oligomères substitués sur l'atome d'azote et leurs conjugués manifestant une aptitude réversible à la thermoprécipitation, **caractérisé en ce que** les (méth)acrylamides oligomères substitués sur l'atome d'azote et leurs conjugués sont soumis à une précipitation thermique et à une filtration en présence de sels et en présence d'adjuvants de filtration.

2. Procédé selon la revendication 1, **caractérisé en ce que** les oligomères sont constitués par des unités récurrentes de N-isopropylacrylamide, de N-n-propylacrylamide ou de N-acryloylpyrrolidine ou bien sont composés par des co-oligomères de N-isopropylacrylamide et de N,N-diméthylacrylamide dans un rapport des monomères s'élevant de 80 à 20.

3. Procédé selon les revendications 1 et 2, **caractérisé en ce qu'**on utilise, comme sels, des sels de potassium, de sodium, d'ammonium, de calcium et/ou de magnésium, de chlorure, d'acétate et/ou de sulfate ainsi que leurs mélanges.

4. Procédé selon la revendication 3, **caractérisé en ce que** la concentration totale des sels se situe entre 0,01 M et 3 M.

5. Procédé selon les revendications 1 à 4, **caractérisé en ce que** la quantité totale des (méth)acrylamides oligomères substitués sur l'atome d'azote et de leurs conjugués en solution aqueuse se situe entre 0,1 % en poids et 10 % en poids.

6. Procédé selon les revendications 1 à 5, **caractérisé en ce que** les (méth)acrylamides oligomères substitués sur l'atome d'azote et leurs conjugués sont soumis à une thermoprécipitation à une température de 1 °C à 20 °C, de préférence de 5 °C à 10 °C au-dessus de la valeur LCST et sont soumis à une filtration à la même température.

7. Procédé selon les revendications 1 à 6, **caractérisé en ce qu'**on utilise comme adjuvants de filtration, des celluloses possédant les propriétés suivantes :
- fraction de cellulose : ≥ 99 %
- densité au mouillé : 0,2 - 0,3 g/cm³
- longueur des fibres : < 75 µm (99 %), < 32 µm (65 %)

8. Mélange d'adjuvants de filtration et de (méth)acrylamides oligomères substitués sur l'atome d'azote et de leurs conjugués manifestant une aptitude réversible à la précipitation thermique, qui ont été séparés conformément au procédé selon les revendications 1 à 7, **caractérisé par** un taux de séparation de l'adjuvant de filtration et des (méth)acrylamides oligomères substitués sur l'atome d'azote et de leurs conjugués manifestant une aptitude réversible à la précipitation thermique, respectivement supérieur à 90 %.

9. Composés de (méth)acrylamides substitués sur l'atome d'azote selon la revendication 8, **caractérisés en ce que** les (méth)acrylamides substitués sur l'atome d'azote manifestant une aptitude réversible à la précipitation thermique possèdent une masse molaire moyenne entre 500 g/mol et 5.000 g/mol.

10. Composés de (méth)acrylamides substitués sur l'atome d'azote selon la revendication 8, **caractérisés en ce que**, pour les (méth)acrylamides substitués sur l'atome d'azote manifestant une aptitude réversible à la précipitation thermique et leurs conjugués, la valeur LCST dans de l'eau se situe entre 10 °C et 80 °C.
